(19) Europäisches Patentamt
European Patent Office
Office européen des brevets

(11) EP 2 161 770 A1

(12) EUROPEAN PATENT APPLICATION
published in accordance with Art. 153(4) EPC

(43) Date of publication:
**10.03.2010 Bulletin 2010/10**

(21) Application number: **08765604.7**

(22) Date of filing: **13.06.2008**

(51) Int Cl.:
***H01M 8/02*** (2006.01) ***H01M 4/86*** (2006.01)
***H01M 4/88*** (2006.01) ***H01M 8/10*** (2006.01)

(86) International application number:
**PCT/JP2008/060894**

(87) International publication number:
**WO 2008/153145 (18.12.2008 Gazette 2008/51)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.06.2007 JP 2007159471**

(71) Applicant: **Sumitomo Chemical Company, Limited**
**Tokyo 104-8260 (JP)**

(72) Inventors:
- **KURODA, Ryuma**
**Komatsu-shi**
**Ishikawa 932-0832 (JP)**
- **KURITA, Hiroyuki**
**Tsukuba-shi**
**Ibaraki 305-0045 (JP)**
- **SHINODA, Hiroshi**
**Niihama-shi**
**Ehime 792-0002 (JP)**
- **SAITO, Shin**
**Tsukuba-shi**
**Ibaraki 305-0822 (JP)**

(74) Representative: **Vossius & Partner**
**Siebertstraße 4**
**81675 München (DE)**

# (54) FILM-ELECTRODE ASSEMBLY, FILM-ELECTRODE GAS DIFFUSION LAYER ASSEMBLY HAVING THE SAME, SOLID STATE POLYMER FUEL CELL, AND FILM-ELECTRODE ASSEMBLY MANUFACTURING METHOD

(57) A membrane-electrode assembly 1 having an anode catalyst layer 20 and cathode catalyst layer 30 that are mutually opposing and a polymer electrolyte membrane 10 formed between the anode catalyst layer 20 and cathode catalyst layer 30, wherein the anode catalyst layer 20 is composed of a plurality of ion-exchange layers 20a and 20b with different layer ion-exchange capacities, and of the plurality of ion-exchange layers 20a and 20b, ion-exchange layer A (20a) having the smallest layer ion-exchange capacity is situated more toward the polymer electrolyte membrane 10 side than ion-exchange layer B (20b) having the largest layer ion-exchange capacity, and the ratio of the layer ion-exchange capacity of the ion-exchange layer B (20b) with respect to the layer ion-exchange capacity of the ion-exchange layer A (20a) is 1.7 or greater.

*Fig.1*

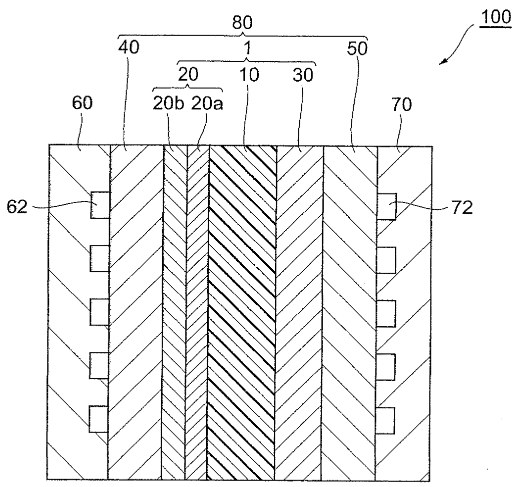


EP 2 161 770 A1

## Description

### Technical Field

The present invention relates to a membrane-electrode assembly, a membrane-electrode-gas diffusion layer assembly comprising it, a solid polymer fuel cell, and a membrane-electrode assembly manufacturing method.

### Background Art

Depletion of petroleum resources is currently a serious problem, while consumption of fossil fuels is also exacerbating environmental problems such as air pollution and global warming. Because of this situation, fuel cells have become an object of interest as clean electric power sources that do not emit carbon dioxide, and some have begun to come into practical use.

Solid polymer fuel cells employing polymer electrolyte membranes are receiving attention as fuel cells for use in automobiles, because they can easily produce high voltage and high current. Known electrode structures used in these solid polymer fuel cells include membrane-electrode assemblies (hereinafter also referred to as "MEA").

An MEA comprises a polymer electrolyte membrane with proton conductivity and a pair of catalyst layers formed on the main sides of the polymer electrolyte membrane and sandwiching the polymer electrolyte membrane. The catalyst layers comprise a catalyst such as platinum, a catalyst support such as carbon black that supports the catalyst, and a proton-conductive polymer that retains the catalyst support.

A membrane-electrode-gas diffusion layer assembly is constructed by laminating a pair of gas diffusion layers in contact with each catalyst layer, in such a manner as to sandwich the MEA described above. A solid polymer fuel cell is constructed by laminating a pair of separators as gas passageways in contact with each gas diffusion layer, in such a manner as to sandwich the membrane-electrode-gas diffusion layer assembly described above.

In a solid polymer fuel cell, one of the catalyst layers functions as the anode catalyst layer (fuel electrode) while the other catalyst layer functions as the cathode catalyst layer (oxygen electrode). A fuel gas such as hydrogen or methanol is introduced from the anode side separator through the anode side gas diffusion layer into the anode catalyst layer. Also, an oxidant gas such as air or oxygen is introduced from the cathode side separator through the cathode side gas diffusion layer into the cathode catalyst layer.

In the anode catalyst layer, action of the catalyst substance in the anode catalyst layer produces protons ($H^+$) and electrons from the fuel gas (hydrogen). The protons are transferred into the cathode catalyst layer through the polymer electrolyte membrane. The action of the catalyst substance in the cathode catalyst layer causes the protons to react with the oxidant gas (oxygen) introduced into the cathode catalyst layer and with the electrons, producing water. Thus, electrical connection between the anode catalyst layer and cathode catalyst layer forms a circuit in which electrons produced in the anode catalyst layer are conducted to the cathode catalyst layer, thus producing a current.

Various methods have been proposed for fabricating MEAs, such as a method in which a catalyst layer formed on a support is thermocompression bonded with a polymer electrolyte membrane and the support is then released, a method in which a catalyst ink comprising a catalyst and a polymer electrolyte is cast onto a polymer electrolyte membrane, and a method in which a similar catalyst ink is coated onto a polymer electrolyte membrane by spray coating or the like to form a catalyst layer. Each catalyst layer of the MEA formed by such a method will usually have a single-layer structure with a simple composition.

Various techniques are currently being proposed for catalyst layer structures aimed at enhancing solid polymer fuel cell performance. For example, it has been proposed to decrease the electrolyte content on the gas diffusion layer side of the catalyst layer to increase the reactive sites on the gas diffusion layer side of the catalyst layer, varying the electrolyte content in the thickness direction (see Patent document 1, for example), or varying the polymer electrolyte concentration in the direction of the reactive gas port, i.e. the in-plane direction of the catalyst layer, to prevent variation in the moisture distribution of the catalyst layer (see Patent document 2, for example).

It has also been proposed to reduce the amount of electrolyte toward the gas diffusion layer side of the catalyst layer and increase it toward the polymer electrolyte side, while varying the amount of polymer electrolyte in the in-plane direction, in order to improve the diffusibility of the reactive gas (see Patent document 3, for example), or to increase the polymer electrolyte content toward the polymer electrolyte membrane of the catalyst layer to produce an electrical conductivity/proton conductivity gradient in the thickness direction of the electrode layer (see Patent document 4, for example).

[Patent document 1] Japanese Unexamined Patent Publication No. HEI 9-180730
[Patent document 2] Japanese Unexamined Patent Publication No. 2002-151090
[Patent document 3] Japanese Unexamined Patent Publication No. 2001-319663
[Patent document 4] Japanese Unexamined Patent Publication No. 2005-259525

## Disclosure of the Invention

### Problems to be Solved by the Invention

Varying the polymer electrolyte concentration in the in-plane direction (gas passage direction) of the catalyst layer as in Patent documents 2 and 3, however, increases the complexity of the production process for the membrane-electrode assembly, and is not desirable in practice. In addition, the electric power generation performance of solid polymer fuel cells is still insufficient even when using the catalyst layers described in Patent documents 1-4, and further improvement is desired. The electric power generation performance of the solid polymer fuel cell can usually be improved by reducing the overvoltage of the catalyst layer and lowering the cell resistance, which is ohmic resistance.

It is therefore an object of the present invention to provide a membrane-electrode assembly with satisfactorily excellent electric power generation performance that is easy to produce, as well as a membrane-electrode-gas diffusion layer assembly comprising such a membrane-electrode assembly, and also a solid polymer fuel cell and a membrane-electrode assembly manufacturing method.

### Means for Solving the Problems

The present inventors have conducted much research on structures of membrane-electrode assemblies with the aim of improving the electric power generation performance of solid polymer fuel cells. As a result of ardent investigation focusing on the composition of the anode catalyst layer, it was found that it is effective to vary the layer ion-exchange capacity of the anode catalyst layer in the thickness direction of the catalyst layer, and the invention has been completed upon this finding.

Specifically, the present invention provides a membrane-electrode assembly comprising an anode catalyst layer and cathode catalyst layer that are mutually opposing and a polymer electrolyte membrane formed between the anode catalyst layer and cathode catalyst layer, wherein the anode catalyst layer is composed of a plurality of ion-exchange layers with different layer ion-exchange capacities, and of the plurality of ion-exchange layers, ion-exchange layer A having the smallest layer ion-exchange capacity is situated more toward the polymer electrolyte membrane than ion-exchange layer B having the largest layer ion-exchange capacity, and the ratio of the layer ion-exchange capacity of ion-exchange layer B with respect to the layer ion-exchange capacity of ion-exchange layer A is 1.7 or greater.

Here, "layer ion-exchange capacity" refers to the total number of equivalents of ion-exchange groups present in the ion-exchange layer with respect to the total weight of the ion-exchange layer, and is determined from the product of the weight ratio of the ion exchanger with respect to the total ion-exchange layer and the ion-exchange capacity of the ion exchanger.

As mentioned above, Patent documents 1, 3 and 4 have already proposed lamination of a plurality of ion-exchange layers with different catalyst layer compositions. However, since the polymer electrolyte content in the catalyst layer is increased toward the polymer electrolyte membrane side in Patent documents 1, 3 and 4, the polymer electrolyte membrane side has greater layer ion-exchange capacity. That is, the invention has a construction opposite to that of these prior arts. This construction is based on knowledge of the present inventors in regard to specifying the structure of the anode catalyst layer, with focus on the balance of moisture in the polymer electrolyte membrane.

Either or both the ion-exchange layer A and B in the membrane-electrode assembly of the invention are preferably the outermost layers of the anode catalyst layer. Ion-exchange layer A as the outermost layer of the anode catalyst layer means that ion-exchange layer A in the membrane-electrode assembly is situated in contact with the polymer electrolyte membrane, and ion-exchange layer B as the outermost layer of the anode catalyst layer means that ion-exchange layer B in the membrane-electrode assembly is situated in contact with the anode side gas diffusion layer.

Using such an anode catalyst layer will further inhibit release of moisture from the anode catalyst layer into the fuel gas phase. This will allow formation of a membrane-electrode assembly with a more satisfactory moisture balance to obtain a membrane-electrode assembly with more excellent electric power generation performance.

The membrane-electrode assembly of the invention preferably has the ion-exchange layers with smaller layer ion-exchange capacity situated more toward the polymer electrolyte membrane.

Using such an anode catalyst layer will even further inhibit release of moisture from the anode catalyst layer into the fuel gas phase. This will allow formation of a membrane-electrode assembly with an even more satisfactory moisture balance to obtain a membrane-electrode assembly with even more excellent electric power generation performance.

The membrane-electrode assembly of the invention preferably has 2 ion-exchange layers.

This will allow a membrane-electrode assembly with more excellent electric power generation performance to be produced more easily.

According to the invention there is further provided a membrane-electrode assembly comprising a mutually opposing anode catalyst layer and cathode catalyst layer, and a polymer electrolyte membrane formed between the

anode catalyst layer and cathode catalyst layer, wherein the anode catalyst layer has a continuously decreasing layer ion-exchange capacity toward the polymer electrolyte membrane, and the ratio of the layer ion-exchange capacity on the surface of the anode catalyst layer opposite the polymer electrolyte membrane side with respect to the layer ion-exchange capacity of the surface of the polymer electrolyte membrane side of the anode catalyst layer is 1.7 or greater.

In such an anode catalyst layer, the side in contact with the fuel gas has high hydrophilicity because of its high layer ion-exchange capacity, while the side in contact with the polymer electrolyte membrane has low hydrophilicity because of its low layer ion-exchange capacity. Therefore, moisture is not easily released into the fuel gas phase of the anode side gas diffusion layer on the side in contact with the fuel gas, and reduction in the moisture content of the anode catalyst layer can thus be minimized. In addition, diffusion and migration of moisture from the polymer electrolyte membrane side to the anode catalyst layer side can be inhibited. This effect allows a satisfactory moisture balance to be achieved for the membrane-electrode assembly as a whole, without reduction in the moisture content of the polymer electrolyte membrane. It will thus be possible to lower the internal resistance of the solid polymer fuel cell to obtain a membrane-electrode assembly with excellent electric power generation performance.

Either or both the cathode catalyst layer and anode catalyst layer in the membrane-electrode assembly of the invention preferably contain a hydrocarbon-based ion exchanger.

A membrane-electrode assembly comprising such a catalyst layer has more satisfactory water retention for the catalyst layer itself, and the ionic conductive of the catalyst layer thus tends to be higher, so that a membrane-electrode assembly with more excellent electric power generation performance can be obtained.

The polymer electrolyte membrane composing the membrane-electrode assembly of the invention is preferably a polymer electrolyte membrane comprising a hydrocarbon-based ion exchanger. By using such a polymer electrolyte membrane it is possible to obtain a membrane-electrode assembly with even more excellent electric power generation performance. A polymer electrolyte membrane comprising a hydrocarbon-based ion exchanger also has the advantage of superior heat resistance, recycling properties and mechanical strength, compared to a polymer electrolyte membrane comprising a fluorine-based hydrocarbon-based ion exchanger, which has been most commonly used in the prior art.

According to the invention there is further provided a membrane-electrode-gas diffusion layer assembly characterized by comprising the aforementioned membrane-electrode assembly, an anode side gas diffusion layer formed on the side of the anode catalyst layer opposite the polymer electrolyte membrane side, and a cathode side gas diffusion layer formed on the side of the cathode catalyst layer opposite the polymer electrolyte membrane side.

Such a membrane-electrode-gas diffusion layer assembly comprises a membrane-electrode assembly having the characteristics described above, and therefore has low cell resistance and sufficiently excellent electric power generation performance.

According to the invention there is further provided a solid polymer fuel cell characterized by comprising the aforementioned membrane-electrode-gas diffusion layer assembly, an anode side separator formed on the side of the anode side gas diffusion layer opposite the anode catalyst layer side, and a cathode side separator formed on the side of the cathode side gas diffusion layer opposite the cathode catalyst layer side.

Such a solid polymer fuel cell comprises a membrane-electrode assembly having the characteristics described above, and therefore exhibits low cell resistance and sufficiently excellent electric power generation performance.

According to the invention there is also provided a membrane-electrode assembly manufacturing method comprising a catalyst layer-forming step in which an anode catalyst layer is formed on a polymer electrolyte membrane by laminating ion-exchange layers, formed from catalyst inks comprising ion exchangers and catalyst substances, in order on a polymer electrolyte membrane in such a manner that the layer ion-exchange capacities of the ion-exchange layers decrease toward the polymer electrolyte membrane. The term "catalyst ink" means a liquid composition used to form a catalyst layer, as is widely employed in the field.

This will lower the amount of moisture released from the anode catalyst layer to the fuel gas phase of the anode side gas diffusion layer, while inhibiting diffusion and migration of moisture from the polymer electrolyte membrane side into the anode catalyst layer, to facilitate production of a membrane-electrode assembly with excellent electric power generation performance.

According to the invention, the anode catalyst layer is preferably formed by direct coating of the catalyst inks onto the polymer electrolyte membrane by a spray method in the catalyst layer-forming step.

Formation of the anode catalyst layer by a spray method will allow a layer with excellent in-plane uniformity and a catalyst layer to be formed on the surface parallel to the contact surface of the anode catalyst layer with the polymer electrolyte membrane. It will thereby be possible to easily produce a membrane-electrode assembly with even more excellent electric power generation performance.

## Effect of the Invention

According to the invention it is possible to provide a membrane-electrode assembly with satisfactorily excellent electric power generation performance, as well as a membrane-electrode-gas diffusion layer assembly comprising the

membrane-electrode assembly, and a solid polymer fuel cell. It is also possible to provide a method for easily manufacturing a membrane-electrode assembly with sufficiently excellent electric power generation performance.

## Brief Description of the Drawings

Fig. 1 is a schematic cross-sectional view showing the structure of a membrane-electrode assembly, membrane-electrode-gas diffusion layer assembly and solid polymer fuel cell, according to a first embodiment of the invention.
Fig. 2 is a schematic cross-sectional view showing the structure of a membrane-electrode assembly, membrane-electrode-gas diffusion layer assembly and solid polymer fuel cell, according to a second embodiment of the invention.
Fig. 3 is a schematic cross-sectional view showing the structure of a membrane-electrode assembly, membrane-electrode-gas diffusion layer assembly and solid polymer fuel cell, according to a third embodiment of the invention.
Fig. 4 is an is a graph showing the relationship between $I_{max}/I_{min}$ and current density.

## Explanation of Symbols

1, 2, 3: MEA, 10: polymer electrolyte membrane, 20, 22, 24: anode catalyst layers, 30: cathode catalyst layer, 40: anode side gas diffusion layer, 50: cathode side gas diffusion layer, 60: anode side separator, 70: cathode side separator, 62: fuel gas fluid channel, 72: oxidant gas fluid channel, 80, 82, 84: membrane-electrode-gas diffusion layer assemblies, 20a, 20b, 22a, 22b, 22c, 22d: ion-exchange layers, 24A, 24B: contact surfaces, 100, 200, 300: solid polymer fuel cells.

## Best Mode for Carrying Out the Invention

Preferred embodiments of the invention will now be explained with reference to the accompanying drawings where necessary. Throughout the explanation of the drawings, identical or corresponding elements will be referred to by the same reference numerals and will be explained only once.

Fig. 1 is a schematic cross-sectional view showing the structure of a membrane-electrode assembly, membrane-electrode-gas diffusion layer assembly and solid polymer fuel cell, according to a first embodiment of the invention. In the solid polymer fuel cell 100 there are laminated an anode side separator 60, an anode side gas diffusion layer 40, an MEA 1, a cathode side gas diffusion layer 50 and a cathode side separator 70, in that order. The MEA 1 comprises a polymer electrolyte membrane 10, an anode catalyst layer 20 sandwiching the polymer electrolyte membrane 10 and anode side gas diffusion layer 40, and a cathode catalyst layer 30 sandwiching the polymer electrolyte membrane 10 and cathode side gas diffusion layer 50. The membrane-electrode-gas diffusion layer assembly 80 comprises an MEA 1, an anode side gas diffusion layer 40 sandwiching the MEA 1 and anode side separator 60, and a cathode side gas diffusion layer 50 sandwiching the MEA 1 and cathode side separator 70.

The anode side separator 60 comprises a fuel gas fluid channel 62 and the cathode side separator 70 comprises an oxidant gas fluid channel 72.

The anode catalyst layer 20 comprises an ion-exchange layer 20a and an ion-exchange layer 20b, laminated in the direction of lamination of the solid polymer fuel cell 100. The ion-exchange layer 20a is provided in contact with the polymer electrolyte membrane 10, and the ion-exchange layer 20b is provided in contact with the anode side gas diffusion layer 40.

The polymer electrolyte membrane 10 contains a polymer electrolyte. The anode catalyst layer 20 and cathode catalyst layer 30 contain a catalyst and an ion exchanger. Here, "ion exchanger" refers to an organic compound or inorganic compound that participates in ion-exchange reaction, and it is preferably a high molecular compound having an acidic group (cation exchange group) such as a sulfonic acid or phosphonic acid group or a basic group (anion exchange group) such as an amino group or imidazoyl group, i.e. it is preferably the same polymer electrolyte composing the polymer electrolyte membrane 10.

Preferably, the thickness of the polymer electrolyte membrane 10 is 10-50 μm, the thickness of the anode catalyst layer 20 is 6-40 μm and the thickness of the cathode catalyst layer 30 is 3-40 μm. The thicknesses of the anode side gas diffusion layer 40 and cathode side gas diffusion layer 50 are preferably 30-500 μm. The thicknesses of the anode side separator 60 and cathode side separator 70 are preferably 1000-10,000 μm. The thicknesses of the ion-exchange layer 20a and ion-exchange layer 20b are preferably each 3-37 μm. If the thickness of either the ion-exchange layer 20a or the ion-exchange layer 20b is less than 3 μm the amount of moisture released into the fuel gas phase may not be sufficiently reduced, and if it exceeds 37 μm the gas diffusion distance in the catalyst layer will be too long, tending to interfere with efficient electrode reaction.

The layer ion-exchange capacity ($I_{20a}$) of the ion-exchange layer 20a is smaller than the layer ion-exchange capacity ($I_{20b}$) of the ion-exchange layer 20b, with $I_{20b}/I_{20a}$ being 1.7 or greater. From the viewpoint of obtaining even more excellent electric power generation performance, $I_{20b/20a}$ is preferably 2.0 or greater and more preferably 2.4 or

greater.

If the layer ion-exchange capacity ($I_{20b}$) of the ion-exchange layer 20b is too high, it will undergo notable swelling when the ion exchanger in the ion-exchange layer 20b absorbs moisture, while the gas permeation pathway will also be obstructed, and therefore $I_{20b}/I_{20a}$ is preferably less than 4.5.

An ion-exchange layer 20b with a large layer ion-exchange capacity has high hydrophilicity and excellent water retention. It will thus be possible to sufficiently retain moisture supplied with the fuel gas, so that release of the moisture into the fuel gas phase can be inhibited. On the other hand, an ion-exchange layer 20a with a small layer ion-exchange capacity has low hydrophilicity due to the small layer ion-exchange capacity, and therefore the water retention tends to be low. It is thus possible to reduce the amount of moisture that passes through the anode catalyst layer 20 from the polymer electrolyte membrane 10 and is released into the fuel gas phase of the anode gas diffusion layer 40. This will help to maintain a satisfactory moisture balance throughout the entire polymer electrolyte membrane 10.

The "layer ion-exchange capacity" according to the invention is controlled by the ion-exchange capacity and content weight ratio of the ion exchanger in the ion-exchange layer. More specifically, it is calculated as the product of the ion-exchange capacity of the ion exchanger, and the weight ratio of the ion exchanger with respect to the total solid content (the components remaining after removing the volatile substances from the catalyst ink), in the ion exchanger in the catalyst ink applied when the catalyst ink is used to form the ion-exchange layer as described hereunder. When using a catalyst ink with a plurality of ion exchangers, the product of the weight ratio and ion-exchange capacity for each ion exchanger can be calculated, and calculation performed using the total. The ion-exchange capacity of the ion exchanger can be experimentally determined by neutralization titration.

The solid polymer fuel cell 100 may further include a gasket to prevent leakage of fuel gas and oxidant gas to the outside.

The solid polymer fuel cell 100 according to this embodiment can be easily produced since the anode catalyst layer 20 is composed of two layers, the ion-exchange layer 20a and ion-exchange layer 20b. The production process will be described below.

Fig. 2 is a schematic cross-sectional view showing the structure of a membrane-electrode assembly, membrane-electrode-gas diffusion layer assembly and solid polymer fuel cell, according to a second embodiment of the invention. In the solid polymer fuel cell 200 there are laminated an anode side separator 60, an anode side gas diffusion layer 40, an MEA 2, a cathode side gas diffusion layer 50 and a cathode side separator 70, in that order. The MEA 2 comprises a polymer electrolyte membrane 10, an anode catalyst layer 22 sandwiching the polymer electrolyte membrane 10 and anode side gas diffusion layer 40, and a cathode catalyst layer 30 sandwiching the polymer electrolyte membrane 10 and cathode side gas diffusion layer 50. The membrane-electrode-gas diffusion layer assembly 82 comprises an MEA 2, an anode side gas diffusion layer 40 sandwiching the MEA 2 and anode side separator 60, and a cathode side gas diffusion layer 50 sandwiching the MEA 2 and cathode side separator 70.

The anode catalyst layer 22 comprises an ion-exchange layer 22a, an ion-exchange layer 22b, an ion-exchange layer 22c and an ion-exchange layer 22d (ion-exchange layers 22a-22d) laminated in the direction of lamination of the solid polymer fuel cell 200. The ion-exchange layers 22a-22d are laminated in the order: ion-exchange layers 22a, 22b, 22c, 22d, from the polymer electrolyte membrane 10 side toward the anode side gas diffusion layer 40 side. That is, the ion-exchange layer 22a is in contact with the polymer electrolyte membrane 10, and the ion-exchange layer 22d is in contact with the anode side gas diffusion layer 40.

The membrane-electrode assembly (MEA 2) of this embodiment differs from the membrane-electrode assembly (MEA 1) of the first embodiment in that the anode side catalyst layer 22 is composed of the 4 layers, ion-exchange layers 22a-22d.

If the layer ion-exchange capacities of the ion-exchange layers 22a-22d are defined as $I_{22a}$, $I_{22b}$, $I_{22c}$ and $I_{22d}$ ($I_{22a}$-$I_{22d}$), then the relationship represented by inequality (1) below is preferably satisfied for the layer ion-exchange capacities.

$$I_{22a} < I_{22b} < I_{22c} < I_{22d} \quad (1)$$

This can further inhibit release of moisture from the anode catalyst layer 22 into the fuel gas phase of the anode side gas diffusion layer 40, thus further inhibiting reduction in the moisture content of the polymer electrolyte membrane 10. It will thus be possible to more satisfactorily maintain moisture balance throughout the entire MEA 2.

When the relationship of inequality (1) is satisfied, $I_{22d}/I_{22a}$ is also 1.7 or greater. The ratio $I_{22d}/I_{22a}$ is preferably 2.0 or greater and more preferably 2.4 or greater. This can even further inhibit release of moisture from the anode catalyst layer 22 into the fuel gas phase of the anode side gas diffusion layer 40, thus inhibiting reduction in the moisture content of the polymer electrolyte membrane 10. It will thus be possible to even more satisfactorily maintain moisture balance throughout the entire MEA 2.

Even when the relationship of inequality (1) above is not satisfied, the effect of the invention can be obtained if the ratio of the maximum value to the minimum value among $I_{22}/I_{22d}$ is 1.7 or greater, and the layer with the largest layer ion-exchange capacity is situated more toward the anode side gas diffusion layer 40 side than the layer with the smallest. Even if $I_{22c} > I_{22d}$, for example, it will be possible to obtain a solid polymer fuel cell with sufficiently excellent electric power generation performance if either or both $I_{22c}/I_{22a}$ and $I_{22c}/I_{22b}$ are 1.7 or greater.

The thickness of each of the ion-exchange layers 22a-22d is preferably 3-37 μm, selected with the aim of facilitating diffusion of reactive gas passing through the catalyst layer. If any of the thicknesses of the ion-exchange layers 22a-22d is smaller than 3 μm, it may not be possible to sufficiently reduce the amount of moisture released from the anode side gas diffusion phase 40 to the fuel gas phase.

The anode catalyst layer 22 is composed of 4 ion-exchange layers in this embodiment, but the number of ion-exchange layers may be increased to 5 or more. The upper limit for the number of ion-exchange layers is not particularly restricted, but it is preferably no greater than 5 and more preferably no greater than 3 as the practical range. As mentioned above, however, the number of ion-exchange layers composing the anode catalyst layer 22 is more preferably 2 as in the first embodiment described above, in consideration of facilitating production of the anode catalyst layer.

Fig. 3 is a schematic cross-sectional view showing the structure of a membrane-electrode assembly, membrane-electrode-gas diffusion layer assembly and solid polymer fuel cell, according to a third embodiment of the invention. In the solid polymer fuel cell 300 there are laminated an anode side separator 60, an anode side gas diffusion layer 40, an MEA 3, a cathode side gas diffusion layer 50 and a cathode side separator 70, in that order. The MEA 3 comprises a polymer electrolyte membrane 10, an anode catalyst layer 24 sandwiching the polymer electrolyte membrane 10 and anode side gas diffusion layer 40, and a cathode catalyst layer 30 sandwiching the polymer electrolyte membrane 10 and cathode side gas diffusion layer 50. The membrane-electrode-gas diffusion layer assembly 84 comprises an MEA 3, an anode side gas diffusion layer 40 sandwiching the MEA 3 and anode side separator 60, and a cathode side gas diffusion layer 50 sandwiching the MEA 3 and cathode side separator 70.

The MEA 3 in this embodiment differs from the solid polymer fuel cell 200 of the second embodiment in that the layer ion-exchange capacity of the anode catalyst layer 24 varies continuously in the thickness direction (the direction of lamination of the MEA 3). As illustrated by the graded shading in Fig. 3, the layer ion-exchange capacity of the anode catalyst layer 24 increases continuously from the contact surface 24A with the polymer electrolyte membrane 10 toward the contact surface 24B with the anode side gas diffusion layer 40. The continuous variation of the layer ion-exchange capacity in the thickness direction in this embodiment means that, for example, the anode catalyst layer 24 is constructed of 10 or more ion-exchange layers each with a layer thickness of about 3 μm.

The anode catalyst layer 24 may have a composition that varies continuously in the thickness direction (the direction of lamination of the MEA 3) so that the layer ion-exchange capacity varies continuously in the thickness direction. The compositions within each plane parallel to the contact surface 24A of the anode catalyst layer 24 with the polymer electrolyte membrane 10 may be the same.

The layer ion-exchange capacity ($I_{24A}$) of the ion-exchange layer having the composition at the contact surface 24A of the anode catalyst layer 24 with the polymer electrolyte membrane 10 is smaller than the layer ion-exchange capacity ($I_{24B}$) having the composition at the contact surface 24B of the anode catalyst layer 24 with the anode side gas diffusion layer 40, and $I_{24B}/I_{24A}$ is 1.7 or greater. $I_{24B}/I_{24A}$ is preferably 2.0 or greater and more preferably 2.4 or greater. This can even further inhibit release of moisture from the anode catalyst layer 24 into the fuel gas phase of the anode side gas diffusion layer 40, thus inhibiting reduction in the moisture content of the polymer electrolyte membrane 10. It will thus be possible to even more satisfactorily maintain moisture balance through the entire MEA 3.

As in the case of $I_{20b}/I_{20a}$ explained above, an excessively high $I_{24B}$ will cause notable swelling when the ion exchanger in the ion-exchange layer 20b absorbs moisture, while the gas permeation pathway will also be obstructed, and therefore $I_{24B}/I_{24A}$ is preferably less than 4.5.

The section at the anode side gas diffusion layer 40 side of the anode catalyst layer 24 in this embodiment has high hydrophilicity and excellent water retention. Therefore, it is possible to sufficiently retain moisture supplied with the fuel gas, so that release of the moisture into the fuel gas phase of the anode side gas diffusion layer 40 can be inhibited. On the other hand, the section at the polymer electrolyte membrane 10 of the anode catalyst layer 24 has a small ion-exchange capacity and low water retention, and therefore diffusion and migration of moisture is satisfactory. It is thus possible to increase the amount of moisture supplied from the anode catalyst layer 20 to the polymer electrolyte membrane 10. This will help to maintain a satisfactory moisture balance throughout the entire MEA 3 without lowering the moisture content of the polymer electrolyte membrane 10.

The layer ion-exchange capacities of each ion-exchange layer of the anode catalyst layer in the embodiments described above can be confirmed by the following method, for example.

(1) A scanning electron microscope is used to observe a cross-section of the MEA, and the number of ion-exchange layers composing the anode catalyst layer and the thickness of each ion-exchange layer are measured.

(2) A SAICAS (Surface And Interfacial Cutting Analysis System, commercially available from Daipla Wintes Co., Ltd., for example) is used to cut the anode catalyst layer at each ion-exchange layer interface based on the measured values obtained in (1), and each ion-exchange layer is separated.

(3) The separated ion-exchange layers are sampled to specified weights and the ion-exchange capacities of the sampled ion-exchange layers are measured.

Preferred compositions for the anode catalyst layers 20-24 of the first to third embodiments described above will now be explained in detail. The anode catalyst layers 20-24 each contain an ion exchanger and a catalyst substance.

(Ion exchanger)

As ion exchangers there may be mentioned ion exchangers with acidic groups and ion exchangers with basic groups. Among these there are preferred ion exchangers with acidic groups and more preferably polymer electrolytes with acidic groups, from the viewpoint of obtaining a solid polymer fuel cell with excellent electric power generation performance. As such acidic groups there may be mentioned sulfonic acid ($-SO_3H$), carboxyl (-COOH), phosphonic acid ($-PO(OH)_2$), sulfonylimide ($-SO_2NHSO_2-$) and phenolic hydroxyl (-Ph(OH), where Ph represents a phenyl group). Sulfonic acid and phosphonic acid groups are preferred among these, with sulfonic acid groups being especially preferred.

As examples of polymer electrolytes with acidic groups there may be mentioned (A) polymer electrolytes having sulfonic acid and/or phosphonic acid groups introduced into a hydrocarbon-based polymer comprising an aliphatic hydrocarbon on the main chain, (B) polymer electrolytes having sulfonic acid and/or phosphonic acid groups introduced into a polymer in which some or all of the hydrogens of the aliphatic hydrocarbon are replaced with fluorine atoms, (C) polymer electrolytes having sulfonic acid and/or phosphonic acid groups introduced into a polymer having an aromatic ring on the main chain, (D) polymer electrolytes having sulfonic acid and/or phosphonic acid groups introduced onto the main chain of a polymer with essentially no carbon atoms such as polysiloxane or polyphosphazene, (E) polymer electrolytes having sulfonic acid and/or phosphonic acid groups introduced into a copolymer composed of two or more different repeating units selected from among repeating units forming the polymers of (A)-(D) before introduction of the sulfonic acid and/or phosphonic acid groups, and (F) polymer electrolytes comprising basic nitrogen atoms on the main chain or side chains and having acidic compounds such as sulfuric acid or phosphoric acid introduced by ionic bonding.

As examples of polymer electrolytes of (A) above there may be mentioned resins obtained by using a sulfonating agent to introduce sulfonic acid groups into ethylene-vinylsulfonic acid copolymer, polystyrene or poly(a-methylstyrene). In the case of ethylene-vinylsulfonic acid copolymer, the ion-exchange capacity can be adjusted by varying the proportion of copolymerization of ethylene and vinylsulfonic acid used as monomers. The ion-exchange capacity of a resin having sulfonic acid groups introduced into polystyrene or poly($\alpha$-methylstyrene) with a sulfonating agent can be adjusted by the amount of sulfonating agent used. A sulfonating agent is a compound that replaces hydrogens in an organic compound with sulfonic acid groups. Examples of preferred sulfonating agents include fuming sulfuric acid, sulfur trioxide and chlorosulfonic acid.

As polymer electrolytes of (B) above there may be mentioned Nafion$^R$ by Dupont Corp., Aciplex$^R$ by Asahi Kasei Corp., and Flemion$^R$ by Asahi Glass Co., Ltd. There may also be mentioned sulfonic acid-type polystyrene-graft-ethylene-tetrafluoroethylene copolymer (ETFE) composed of a main chain produced by copolymerization between a fluorine-based vinyl carbide monomer and a hydrocarbon-based vinyl monomer, and hydrocarbon-based side chains with sulfonic acid groups, which is described in Japanese Unexamined Patent Publication No. HEI 9-102322, and sulfonic acid-type poly(trifluorostyrene)-graft-ETFE obtained by graft polymerization of $\alpha,\beta,\beta$-trifluorostyrene onto a copolymer produced by copolymerization between a fluorine-based vinyl carbide monomer and a hydrocarbon-based vinyl monomer and introduction of sulfonic acid groups to produce an ion exchanger, which is described in USP 4,012,303 and USP 4,605,685. The ion-exchange capacity of (B) can be adjusted by the amount of sulfonating agent used.

The (C) polymer electrolytes may have the main chain interrupted by a heteroatom such as an oxygen atom, and as examples there may be mentioned homopolymers of polyetherether ketone, polysulfone, polyethersulfone, poly (arylene ethers), polyimide, poly((4-phenoxybenzoyl)-1,4-phenylene), polyphenylene sulfide, polyphenylquinoxalene and the like having sulfonic acid groups introduced therein by a sulfonating agent, sulfoarylated polybenzimidazoles, sulfoalkylated polybenzimidazoles, phosphoalkylated polybenzimidazoles (see Japanese Unexamined Patent Publication No. HEI 9-110982, for example) and phosphonated poly(phenylene ethers) (see J. Appl. Polym. Sci., 18, p.1969 (1974), for example). The ion-exchange capacity of (C) can be adjusted by the amount of sulfonating agent used.

As examples of polymer electrolytes (D) above there may be mentioned those obtained by introducing sulfonic acid groups into polyphosphazene. The ion-exchange capacity of (D) can be adjusted by the amount of sulfonating agent used.

As the (E) polymer electrolytes there may be used those having sulfonic acid and/or phosphonic acid groups introduced into random copolymers, those having sulfonic acid and/or phosphonic acid groups introduced into alternating copolymers, and those having sulfonic acid and/or phosphonic acid groups introduced into block copolymers.

As examples of random copolymers with sulfonic acid groups introduced therein there may be mentioned the sulfonated polyethersulfone-dihydroxybiphenyl copolymers mentioned in Japanese Unexamined Patent Publication No. HEI 11-116679. The ion-exchange capacity of these copolymers can also be adjusted by the amount of sulfonating agent used.

As examples of block copolymers with sulfonic acid groups introduced therein there may be mentioned block copolymers comprising a sulfonic acid group-containing segment (hydrophilic segment) and an essentially ion-exchange group-free segment (hydrophobic segment), as described in Japanese Unexamined Patent Publication No. 2001-250567. The ion-exchange capacities of such block copolymers can be adjusted by the compositional ratio of the hydrophilic segment and the hydrophobic segment.

As examples of ion exchangers of (F) above there may be mentioned phosphoric acid-containing polybenzimidazoles, such as those mentioned in Japanese Patent Public Inspection No. HEI 11-503262. The ion-exchange capacities of these ion exchangers can be adjusted by the amount of phosphoric acid.

Of the polymer electrolytes mentioned above, the polymer electrolytes of (B) tend to exhibit high proton conductivity while having low ion-exchange capacity. They are therefore preferably used as ion exchangers to form the ion-exchange layer provided on the ion exchanger membrane 10 sides of the anode catalyst layers 20-24.

From the viewpoint of freedom of molecular design, the polymer electrolytes of (C) and (E) are preferred as ion exchangers in the ion-exchange layer or region among the anode catalyst layers 20-24 that is formed on the anode side gas diffusion layer 40 side. Also, compounds with aromatic rings connected to the polymer main chain are preferred among the polymer electrolytes of (C) and (E) since they tend to exhibit excellent heat resistance. Hydrocarbon-based polymer electrolytes are even more preferred among these. The term "hydrocarbon-based polymer electrolyte" refers to an ion exchanger containing few or no fluorine atoms. Specifically, it refers to polymer electrolytes with a fluorine atom content of no greater than 15 wt%.

Particularly preferred among the polymer electrolytes of (C) and (E) mentioned as examples above are those having sulfonic acid groups introduced into block copolymers.

These block copolymers comprise blocks with ion-exchange groups (sulfonic acid or the like) and blocks with essentially no ion-exchange groups. There may be used block copolymers having one each of these blocks or block copolymers having two or more of any of these blocks. Multiblock copolymers having two or more of both blocks may also be used. A block with the aforementioned ion-exchange groups is a block containing an average of at least 0.5 ion-exchange groups per repeating unit composing the block, and more preferably it contains an average of at least 1.0 ion-exchange group per repeating unit. On the other hand, a block with essentially none of the aforementioned ion-exchange groups is a block containing an average of less than 0.5 ion-exchange groups per repeating unit composing the block and more preferably an average of less than 0.1 and even more preferably an average of less than 0.05 per repeating unit.

(Catalyst substance)

The catalyst substance in the anode catalyst layers 20-24 and cathode catalyst layer 30 may be a catalyst substance used for solid polymer fuel cells in the prior art. Specific examples include precious metals such as platinum and platinum-ruthenium alloy, complex-based electrode catalysts (see "Fuel Cells and Polymers", edited by Research Group on Materials for Fuel Cells, The Society of Polymer Science, Japan, p.103-112, Kyoritsu Publishing, November 10, 2005).

From the viewpoint of facilitating transport of hydrogen ions and electrons, the anode catalyst layers 20-24 and cathode catalyst layer 30 preferably contain a conducting material supporting a catalyst substance on the surface, as a support. As conducting materials there may be mentioned conductive carbon materials such as carbon black or carbon nanotubes, and ceramic materials such as titanium oxide. It is particularly preferred to use easy catalyst substance-supporting conductive carbon materials as supports, because of their large area-to-weight ratio.

The anode catalyst layers 20-24 and cathode catalyst layer 30 may also contain a separate conductive carbon material in addition to the conductive carbon material used as the support, for adjustment of the layer ion-exchange capacity. For example, in the ion-exchange layers 20a, 20b of the anode catalyst layer 20, the conductive carbon material content of the ion-exchange layer 20a may be increased over that of the ion-exchange layer 20b, to lower the layer ion-exchange capacity of the ion-exchange layer 20a compared to the ion-exchange layer 20b. As conductive carbon materials for adjustment of the layer ion-exchange capacity there may be mentioned carboxylated carbon materials obtained by treating carbon materials such as active carbon, carbon black or graphite with carboxylating compounds, or sulfonated carbon materials obtained by treating the same with sulfonating compounds (these will hereinafter be referred to collectively as "ion-exchangeable carbon materials").

The anode catalyst layers 20-24 and cathode catalyst layer 30 may additionally contain an ion-exchangeable filler comprising an alkaline substance or acidic substance added to porous particles of active carbon, zeolite, silica gel, active white clay, laminar phosphate or the like.

(Polymer electrolyte membrane)

The polymer electrolyte membrane 10 contains a polymer electrolyte. The polymer electrolyte used may be any of the polymer electrolytes mentioned as examples of ion exchangers for use in the catalyst layer. The polymer electrolyte membrane 10 preferably has excellent mechanical strength or heat resistance in order to obtain a membrane-electrode assembly with excellent practical utility. From this standpoint, the polymer electrolyte membrane 10 is preferably a polymer electrolyte membrane comprising a hydrocarbon-based polymer electrolyte. Of the ion exchangers mentioned above, the polymer electrolyte is preferably an ion exchanger of (C) or (E) above from the viewpoint of achieving both high electric power generation performance and membrane durability. It is more preferably one having a structure with sulfonic acid groups introduced into a block copolymer of (E) above with an aromatic ring on the polymer main chain, and even more preferably it is a block copolymer comprising blocks with sulfonic acid groups and blocks with essentially no ion-exchange groups.

As block copolymers of (E) to be used as polymer electrolytes there may be mentioned the block copolymers with sulfonated aromatic polymer blocks described in Japanese Unexamined Patent Publication No. 2001-250567, and the block copolymers with polyetherketone and/or polyethersulfone main chain structures, described in Japanese Unexamined Patent Publication No. 2003-31232, Japanese Unexamined Patent Publication No. 2004-359925, Japanese Unexamined Patent Publication No. 2005-232439 and Japanese Unexamined Patent Publication No. 2003-113136.

In addition to these polymer electrolytes, the polymer electrolyte membrane 10 may further comprise other components in ranges that do not notably lower the ionic conductivity. As such other components there may be mentioned additives such as plasticizers, stabilizers, release agents and humectants that are ordinarily used in polymers. A stabilizer that can impart radical resistance is preferably used from the viewpoint of minimizing deterioration of the polymer electrolyte membrane of the solid polymer fuel cell. As such stabilizers there may be mentioned metal oxides such as cerium oxide and tungsten or ruthenium oxides.

For improved mechanical strength of the polymer electrolyte membrane, a composite membrane obtained by compositing the ion exchanger with a prescribed support may be used. The support may be a base material with a fibril form or porous membrane form.

(Gas diffusion layer)

The anode side gas diffusion layer 40 and cathode side gas diffusion layer 50 which are used may be publicly known ones. Specifically, there may be used layers formed of a porous material comprising a conducting material such as carbon. For example, porous carbon woven fabric or carbon paper is preferably used from the viewpoint of efficient transport of fuel gas or oxidant gas into the catalyst layers.

(Separator)

The anode side separator 60 and cathode side separator 70 may also be publicly known ones. Specifically, they may be formed of carbon, resin mold carbon, titanium, stainless steel or the like.

A method for manufacturing a membrane-electrode assembly, membrane-electrode-gas diffusion layer assembly and solid polymer fuel cell according to a preferred embodiment of the invention will now be described. A method for manufacturing a membrane-electrode assembly 2, membrane-electrode-gas diffusion layer assembly 82 and solid polymer fuel cell 200 satisfying inequality (1) above according to the second embodiment illustrated in Fig. 2 will be explained here.

The method for manufacturing the membrane-electrode assembly 2 according to this embodiment comprises a catalyst layer-forming step in which an anode catalyst layer 22 is formed on the main side of the polymer electrolyte membrane 10 by laminating ion-exchange layers 22a-22d, formed from a catalyst ink comprising an ion exchanger and a catalyst substance, in order on the main side of the polymer electrolyte membrane 10 in such a manner that the layer ion-exchange capacities of the ion-exchange layers decrease toward the polymer electrolyte membrane. Each step will now be described in detail.

(Preparation of catalyst ink)

First, a catalyst substance and ion exchanger are mixed in a solvent to prepare a catalyst ink. The mixing method used may be a known process employing an ultrasonic dispersion device, homogenizer, ball mill, planetary ball mill, sand mill or the like.

At least four catalyst inks 1, 2, 3, 4 must be prepared to form the four ion-exchange layers 22a, 22b, 22c, 22d with different layer ion-exchange capacities.

The relationship represented by inequality (1) above is satisfied by the layer ion-exchange capacities of the

ion-exchange layers 22a-22d. Adjustment of the layer ion-exchange capacities of the ion-exchange layers 22a-22d to be formed can be accomplished by using the same ion exchanger for preparation of the catalyst inks 1-4 and varying the proportions of the ion exchanger with respect to the total solid content of the catalyst ink (method A), or by adding ion exchangers exhibiting different ion-exchange capacities to each catalyst ink, without varying the proportion of each ion exchanger with respect to the total solid content of the catalyst ink (method B).

In method A, as mentioned above, the same ion exchanger is used for preparation of the catalyst inks 1-4. Specifically, the proportion of the ion exchanger with respect to the total solid content of the catalyst ink is adjusted to be higher in the order: catalyst ink 1, 2, 3, 4. This allows preparation of catalyst ink 1 for formation of the ion-exchange layer 22a, catalyst ink 2 for formation of the ion-exchange layer 22b, catalyst ink 3 for formation of the ion-exchange layer 22c and catalyst ink 4 for formation of the ion-exchange layer 22d.

In method B, catalyst inks 1-4 are prepared using ion exchangers with different ion-exchange capacities. It is advantageous to use the polymer electrolytes mentioned above as ion exchangers, to facilitate production of ion exchangers with different ion-exchange capacities, and they may be produced by (a) first producing a polymer having a site in which an ion-exchange group can be introduced and reacting the polymer with reactants to introduce ion-exchange groups, or (b) using a compound with ion-exchange groups as monomer and polymerizing the monomer.

When the polymer electrolyte is produced by method (a) above, the proportion of reactants (sulfonating agent, etc.) used with respect to the polymer can be modified to change the layer ion-exchange capacity of the ion-exchange layer that is formed. When the polymer electrolyte is produced by the method of (b) above, the layer ion-exchange capacity of the ion-exchange layer that is formed can be easily changed by varying the number of ion-exchange groups and the molar mass of the repeating unit of the ion exchanger derived from the monomer with an ion-exchange group. For copolymerization together with a comonomer without ion-exchange groups, the ion-exchange capacity can be modified by the copolymerization ratio between the repeating unit without ion-exchange groups and the repeating unit with ion-exchange groups.

Of the polymer electrolytes prepared in this manner, the one with the lowest ion-exchange capacity may be used to prepare catalyst ink 1, the one with the next lowest ion-exchange capacity may be used to prepare catalyst ink 2, the one with the next lowest ion-exchange capacity may be used to prepare catalyst ink 3 and the one with the highest ion-exchange capacity may be used to prepare catalyst ink 4. This will allow catalyst inks 1-4 to be prepared for formation of ion-exchange layers 22a-22d.

By using either method A or method B or both in combination, it is possible to prepare catalyst inks 1-4 exhibiting the desired ion-exchange capacities. For this embodiment, it is preferred to prepare catalyst inks 1-4 using ion exchangers exhibiting different ion-exchange capacities, i.e. method B. This is because varying the ion exchanger contents in the catalyst inks will tend to change the gas diffusion properties of the ion-exchange layers that are formed.

As mentioned above, precious metals such as platinum or platinum-ruthenium alloy, or complex-based electrode catalysts, may be used as the catalyst substances in the catalyst inks, and they may be directly mixed with the catalyst inks 1-4. From the viewpoint of obtaining uniform dispersion of the catalyst substance in the catalyst layer, a conductive carbon material having a catalyst supported on the surface is preferably mixed with the catalyst inks 1-4.

When a catalyst-supporting material having a catalyst substance supported on a support is used in each of the catalyst inks, it is important for the support and ion exchanger to be in an appropriate proportion in the catalyst ink in order to promote efficient electrode reaction. If the weight ratio of the support with respect to the ion exchanger is too low the ionic conductivity will tend to be reduced, while if it is too high the catalytic activity may be lowered or the electron conductivity may be reduced. Specifically, the ratio of the ion exchanger weight to the support weight is preferably 0.05-1.0.

Also, the content of the catalyst substance with respect to the total of each catalyst ink is preferably 0.1-40 wt% from the standpoint of cost.

The solvents used in catalyst inks 1-4 may be hydrophilic organic solvents (for example, alcohol or the like) or mixtures of such solvents. A catalyst ink employing such solvents will have the advantage of not significantly impairing the polymer electrolyte membrane when it is directly coated onto the polymer electrolyte membrane 10. From the viewpoint of achieving high volatility, it is preferred to use water, ethanol or a mixture of water and ethanol.

The catalyst inks 1-4 may also contain other components in addition to the components mentioned above. For example, a water-repellent material such as polytetrafluoroethylene may be added to increase the water-repellency of the catalyst layer. For increased gas diffusion of the catalyst layer, a pore-forming material such as calcium carbonate may also be included. For increased durability of the obtained MEA 2, a stabilizer such as a metal oxide or the like may also be added. These components can be combined with the catalyst substance, ion exchanger and solvent by the known methods referred to above.

As catalyst inks for formation of the cathode catalyst layer 30 there may be mentioned any of the catalyst inks 1-4 described above, catalyst inks prepared by the same methods described above, or known catalyst inks.

An ion exchanger prepared in the manner described above is also preferably used as the polymer electrolyte for formation of the polymer electrolyte membrane 10. This will allow simultaneous preparation of the ion exchangers for catalyst inks 1-4 and the polymer electrolyte for the polymer electrolyte membrane 10. The ion-exchange capacity

of the polymer electrolyte used to form the polymer electrolyte membrane 10 is preferably determined in consideration of the desired ionic conductivity, water resistance and durability including mechanical/thermal stability of the polymer electrolyte membrane.

(Formation of catalyst layers)

After preparing the catalyst inks, an anode catalyst layer 22 comprising ion-exchange layers 22a-22d is formed on the main side of the polymer electrolyte membrane 10. The anode catalyst layer 22 can be formed by a solution casting method using the catalyst inks 1-4 prepared as described above.

First, catalyst ink 1 is coated onto the main side of the polymer electrolyte membrane 10 and heat treated to remove the solvent and volatilizing components in catalyst ink 1 to form the ion-exchange layer 22a. The heat treatment conditions may be 50-100°C for 0.1-1 hour. The heat treatment conditions may be appropriately adjusted according to the types and amounts of solvent and volatile substances in catalyst ink 1, and the material quality of the polymer electrolyte membrane 10. Ventilation treatment may also be carried out together with heat treatment or instead of heat treatment.

As methods for coating catalyst ink 1 there may be mentioned known methods such as atomizing (for example, spraying), roller coating, gravure coating, knife coating, blade coating or screen printing of the catalyst ink. Spraying by atomizing the catalyst ink is preferred among these since it allows formation of a catalyst layer with excellent in-plane uniformity.

"Spraying" means atomizing the fluid catalyst ink by the jet force of a compressed gas to produce a fine particulate form of the catalyst ink which adheres onto the main side of the polymer electrolyte membrane 10. The spraying method used may be the one described in Japanese Unexamined Patent Publication No. 2004-089976.

The catalyst ink 2 is then coated onto the main side of the ion-exchange layer 22a opposite the contact surface with the polymer electrolyte membrane 10, and is heat treated to remove the solvent and volatilizing components in catalyst ink 2 to form the ion-exchange layer 22b. The heat treatment and coating methods may be the same as for catalyst ink 1.

The catalyst ink 3 is coated in the same manner onto the main side of the ion-exchange layer 22b opposite the contact surface with the ion-exchange layer 22a, and is heat treated to remove the solvent and volatilizing components in catalyst ink 3 to form the ion-exchange layer 22c.

The catalyst ink 4 is coated in the same manner onto the main side of the ion-exchange layer 22c opposite the contact surface with the ion-exchange layer 22b, and is heat treated to remove the solvent and volatilizing components in catalyst ink 4 to form the ion-exchange layer 22d.

A solution casting method can thus be used to form the anode catalyst layer 22 comprising 4 laminated ion-exchange layers 22a-22d on the main side of the polymer electrolyte membrane 10. The cathode catalyst layer 30 may be formed on the main side of the polymer electrolyte membrane 10 opposite the main side on which the anode catalyst layer 22 has been formed.

The cathode catalyst layer 30 may be formed as an ordinary catalyst layer that has been commonly used in the field, i.e. a catalyst layer with a single-layer structure made of a simple composition. Such a catalyst layer may employ any of the catalyst inks 1-4 mentioned above, or another catalyst ink.

The cathode catalyst layer 30 may be formed before or after, or simultaneously with, formation of the anode catalyst layer 22, and there are no particular restrictions on the order of forming each catalyst layer. An MEA 2 can be fabricated in this manner.

A spray method was assumed in the explanation of this embodiment, but the method may instead involve coating of the catalyst ink on the support to form a layer on the support, thermocompression bonding of the layer onto the polymer electrolyte membrane, and subsequent removal of the support (hereinafter also referred to as "support method").

In the support method, four supports (for example, PTFE (polytetrafluoroethylene) sheets) are prepared and the catalyst inks 1-4 are coated onto the respective supports and heat treated to form ion-exchange layers 22a-22d. The coating method and heat treatment conditions may be the same as explained for spraying. The ion-exchange layer 22a is then thermocompression bonded onto the main side of the polymer electrolyte membrane 10 and the support is removed. Next, the ion-exchange layer 22b may be laminated on the ion-exchange layer 22a and the support removed from the ion-exchange layer 22b. Ion-exchange layers 22c and 22d may be laminated in order in the same manner to form the anode catalyst layer 22. The thermocompression bonding is preferably carried out with a pressing machine under conditions of 100°C-200°C, 5-10 MPa, 0.25-1.0 hours.

If the base used to form the anode side gas diffusion layer 40 is used as the support to form the ion-exchange layer 22d, it will be possible to simultaneously form the anode catalyst layer 22 and anode side gas diffusion layer 40. The cathode catalyst layer 50 can also be formed by thermocompression bonding a layer formed on a support onto the main side of the polymer electrolyte membrane 10 (the side opposite the side on which the anode catalyst layer has

been formed) in the same manner as the ion-exchange layer 22a, and removing the support. An MEA 2 can be fabricated in this manner.

The support method may result in damage to the catalyst layer during removal of the support. On the other hand, spraying tends to result in more excellent bonding between the ion-exchange layer 22a and polymer electrolyte membrane 10 than the support method. From this viewpoint, solution casting is more preferred than the support method for formation of the anode catalyst layer 22 of this embodiment.

The anode catalyst layer 24 of the third embodiment can be formed by continuously coating a catalyst ink on the main side of the polymer electrolyte membrane 10 by spray coating while continuously changing the mixing ratio of two or more different catalyst inks exhibiting different layer ion-exchange capacities, and then removing the solvent.

(Fabrication of membrane-electrode-gas diffusion layer assembly and solid polymer fuel cell)

The MEA 2 formed in the manner described above may be used to produce a membrane-electrode-gas diffusion layer assembly 82 and a solid polymer fuel cell 200. The anode side gas diffusion layer 40 can be laminated on the main side of the anode catalyst layer 22 of the MEA 2 that is not in contact with the polymer electrolyte membrane 10. The cathode side gas diffusion layer 50 can be laminated on the main side of the cathode catalyst layer 30 of the MEA 2 that is not in contact with the polymer electrolyte membrane 10. A membrane-electrode-gas diffusion layer assembly 82 is thus obtained.

An anode side separator 60 comprising a fuel gas fluid channel 62 may also be laminated on the main side of the anode side gas diffusion layer 40 opposite the contact surface with the anode catalyst layer 22, for supply of fuel gas. In addition, a cathode side separator 72 comprising an oxidant gas fluid channel 72 may be laminated on the main side of the cathode side gas diffusion layer 50 opposite the contact surface with the cathode catalyst layer 30, for supply of oxidant gas. A solid polymer fuel cell 200 according to this embodiment can thus be obtained.

The method of laminating the anode side gas diffusion layer 40 and cathode side gas diffusion layer 50 on the MEA 2 and the method of laminating the anode side separator 60 and cathode side separator 70 on the membrane-electrode-gas diffusion layer assembly 82 may both be known methods.

The embodiments described above are only preferred embodiments of the invention, and the invention is in no way limited thereto.

## Examples

The present invention will now be explained in greater detail based on examples and comparative examples, with the understanding that these examples are in no way limitative on the invention.

(Example 1)

<Preparation of ion exchanger A>

In a flask equipped with an azeotropic distillation device there were placed 600 mL of DMSO (dimethyl sulfoxide), 200 mL of toluene, 26.5 g (106.3 mmol) of sodium 2,5-dichlorobenzenesulfonate, 10.0 g of terminal chloro-type polyethersulfone (trade name: SUMIKA EXCEL PES5200P by Sumitomo Chemical Co., Ltd., number-average molecular weight = $5.4 \times 10^4$, weight-average molecular weight = $1.2 \times 10^5$) and 43.8 g (280.2 mmol) of 2,2'-bipyridyl under an argon atmosphere, and the mixture was stirred. The oil bath temperature was then raised to 150°C for azeotropic dehydration of the moisture in the system while distilling off the toluene, and after cooling to 60°C, 73.4 g (266.9 mmol) of bis(1,5-cyclooetadiene)nickel(0) was added, the oil bath temperature was raised to 80°C and the mixture was stirred for 5 hours at the same temperature to obtain a reaction mixture.

After being allowed to cool, the reaction mixture was poured into a large amount of 6 mol/L hydrochloric acid to precipitate a polymer, and the polymer was filtered. Rinsing/filtration of the filtered polymer with 6 mol/L hydrochloric acid was then repeated several times, after which the polymer was rinsed until the filtrate reached neutral, washed with hot water at above 90°C, filtered and dried under reduced pressure to obtain 16.3 g of a polyarylene-based block copolymer (ion exchanger A). The number-average molecular weight of ion exchanger A was 100,000, and the weight-average molecular weight was 260,000. The weight-average molecular weights throughout the present specification are the values measured by gel permeation chromatography (GPC), using a standard polystyrene calibration curve. The GPC analysis can be carried out under the following conditions.

GPC measuring apparatus: HLC-8220 by TOSOH
Column: Two AT-80 M columns by Shodex connected in series.

Column temperature: 40°C
Mobile phase solvent: Dimethylacetamide (LiBr was added to 10 mmol/$dm^3$)
Solvent flow rate: 0.5 mL/min

A film was formed from the ion exchanger A by solution casting, and a halogen moisture content meter (trade name: HR-73 by Mettler-Toledo Inc.) set to a heating temperature of 105°C was used to determine the dry weight of the membrane. The film was then immersed in 5 mL of aqueous 0.1 mol/L sodium hydroxide, and then 50 mL of ion-exchanged water was added and the mixture was allowed to stand for 2 hours. The solution in which the film had been immersed was then subjected to neutralization titration with 0.1 mol/L hydrochloric acid to determine the neutralization point. The layer ion-exchange capacity (IEC, units: meq/g) of the membrane was calculated from the dry weight of the membrane and the amount of hydrochloric acid required for neutralization.
As a result of the measurement, the layer ion-exchange capacity of the membrane obtained from ion exchanger A was found to be 2.3 meq/g.

<Synthesis of stabilizer polymer>

The random copolymer represented by formula (I) below was formulated using diphenylsulfone as the solvent and reacting 4,4'-dihydroxydiphenylsulfone, 4,4'-dihydroxybiphenyl and 4,4'-dichlorodiphenylsulfone in a molar ratio of 4:6:10 in the presence of potassium carbonate. In formula (I), "0.70" and "0.30" shown for each repeating unit represent the molar ratios of each repeating unit.
[Chemical Formula 1]

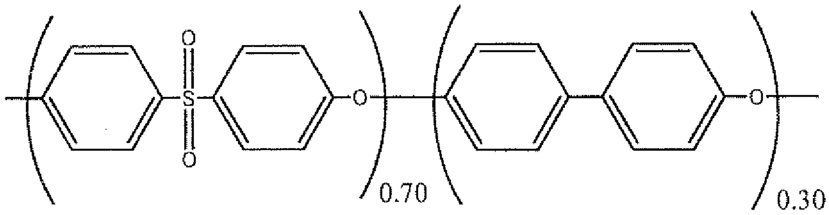

(I)

Next, following the method described in Japanese Unexamined Patent Publication No. 2003-282096, the random copolymer represented by general formula (I) was subjected to bromination and phosphonic acid esterification treatment, and then further hydrolyzed to obtain an additive (stabilizer polymer) having a structure with approximately 0.2 bromo groups and approximately 1.7 phosphonic acid groups (groups represented by $-P(O)(OH)_2$) for each unit comprising the oxybiphenylene structure in general formula (I).

<Fabrication of hydrocarbon-based polymer electrolyte membrane>

A polymer electrolyte solution was formulated by dissolving a mixture of ion exchanger A obtained as described above and an additive (ion exchanger A:additive = 9:1 (weight ratio)) in dimethyl sulfoxide (DMSO) to a concentration of about 15 wt%. The polymer electrolyte solution was then dropped onto a glass plate. A wire coater was used to evenly spread the polymer electrolyte solution onto the glass plate. The clearance of the wire coater was varied during this time to control the coating thickness. After coating the polymer electrolyte solution, it was dried at 80°C under ordinary pressure. The obtained membrane was immersed in 1 mol/L hydrochloric acid and then rinsed with ion-exchanged water, and further dried at ordinary temperature to obtain a hydrocarbon-based polymer electrolyte membrane with a thickness of 30 μm.

<Preparation of catalyst ink 1>

To 6 mL of a commercially available 5 wt% Nafion$^R$ solution (product of Aldrich Co., trade name: Nafion perfluorinated ion-exchange resin, 5 wt% soln in lower aliphatic alcohols/$H_2O$ mix, EW = 1100, IEC = 0.91 meq/g, solvent: water/alcohol mixture) there was added 0.84 g of platinum-supporting carbon (platinum loading weight: 50 wt%), and then 13.20 mL of ethanol was added. The obtained mixture was subjected to ultrasonic treatment for 1 hour and then stirred for 5 hours with a stirrer to obtain catalyst ink 1.

The abbreviation "EW" above represents the Equivalent Weight of exchanged groups with proton conductivity, and it is represented as the dry weight of ion-exchanger to 1 equivalent of ion-exchange groups ("g/ew"). An ion exchange resin with a smaller EW has relatively higher hydrophilicity.

A film was formed from catalyst ink 1 by solution casting, and a halogen moisture content meter (trade name: HR-73 by Mettler-Toledo Inc.) set to a heating temperature of 105°C was used to determine the dry weight of the membrane. The film was then immersed in 5 mL of aqueous 0.1 mol/L sodium hydroxide, and then 50 mL of ion-exchanged water was added and the mixture was allowed to stand for 2 hours. The solution in which the film had been immersed was then subjected to neutralization titration with 0.1 mol/L hydrochloric acid to determine the neutralization point. The layer ion-exchange capacity (IEC, units: meq/g) of the membrane was calculated from the dry weight of the membrane and the amount of hydrochloric acid required for neutralization.

As a result of the measurement, the layer ion-exchange capacity of the membrane (electrode composition) obtained from catalyst ink 1 was found to be 0.22 meq/g.

<Preparation of catalyst ink 2>

To 6.30 g of a commercially available 5 wt% Nafion$^R$ solution (product of Aldrich Co., trade name: Nafion perfluorinated ion-exchange resin, 5 wt% soln in lower aliphatic alcohols/$H_2O$ mix, EW: 1100, ion-exchange capacity: 0.91 meq/g, solvent: water/alcohol mixture) there was added 1.00 g of platinum-supporting carbon (platinum loading weight: 50 wt%), and then a mixture of 6.36 g of water and 43.66 g of ethanol was added. The obtained mixture was subjected to ultrasonic treatment for 1 hour and then stirred for 5 hours with a stirrer to obtain catalyst ink 2.

A membrane was formed in the same manner as catalyst ink 1 and the layer ion-exchange capacity (IEC, units: meq/g) was calculated. As a result of the measurement, the layer ion-exchange capacity of the membrane (electrode composition) obtained from catalyst ink 2 was found to be 0.22 meq/g.

<Preparation of catalyst ink 3>

A 1.0 g portion of the hydrocarbon-based polymer electrolyte membrane mentioned above was dissolved in 99 g of N-methylpyrrolidone (NMP) to produce 100 g of solution. The solution was slowly dropped into 900 g of water while stirring, to obtain a mixture of the polymer electrolyte, NMP and water. The mixture was enclosed with a dialysis membrane (trade name: UC36-32-100 by Sanko Junyaku Co., Ltd., molecular cutoff: 14,000) and washed with running water for 72 hours. The mixture was then removed from the dialysis membrane and concentrated to 50 g using an evaporator under conditions with a temperature of 60°C and a pressure of 50 mTorr to obtain polymer electrolyte emulsion 1. The mean particle size of the polymer electrolyte emulsion 1 was measured with a fiber-optics particle size analyzer (trade name: FPAR-1000 by Otsuka Electronics Co., Ltd.) to be 101 μm. The solvent composition of the obtained polymer electrolyte emulsion was analyzed and found to have a water content of ≥99.9 wt%.

Catalyst ink 3 was produced in the same manner as catalyst ink 2, except that 10 g of polymer electrolyte emulsion 1 was used instead of the 6.30 g of the 5 wt% Nafion$^R$ solution.

A membrane was formed in the same manner as catalyst ink 1 and the layer ion-exchange capacity (IEC, units: meq/g) was calculated. As a result of the measurement, the layer ion-exchange capacity of the membrane (electrode composition) obtained from catalyst ink 3 was found to be 0.38 meq/g.

<Fabrication of MEA>

An MEA was fabricated next in the following manner. First, catalyst ink 1 was coated onto on one main side of the hydrocarbon-based polymer electrolyte membrane fabricated in the manner described above (the side on which the catalyst layer was to be formed), using a large pulse spray catalyst-forming apparatus (Model NCG-FC (CT) Spray Gun, product of Nordson, KK.) in a 5.2 cm square region at the center of the main side.

As the coating conditions for spraying, the distance was 6 cm from the discharge slit to the film, and the stage temperature was set to 75°C. The catalyst ink 1 was recoated onto the coated catalyst ink 1 under the same coating conditions (total coats: 8), and it was allowed to stand on the stage for removal of the solvent, to form a cathode catalyst layer. The amount of platinum in the cathode catalyst layer was calculated from the composition of catalyst ink 1, the weight of the coated catalyst ink 1 and the size of the cathode catalyst layer. As a result, the platinum content of the cathode catalyst layer was 0.60 mg/$cm^2$.

Next, catalyst ink 2 was coated in the same manner onto the other main side of the hydrocarbon-based polymer electrolyte membrane to form ion-exchange layer A and catalyst ink 3 was coated onto ion-exchange layer A to form ion-exchange layer B, thus producing an anode catalyst layer having ion-exchange layer A and ion-exchange layer B laminated in that order on the main side of the hydrocarbon-based polymer electrolyte membrane. The platinum contents of ion-exchange layer A and ion-exchange layer B were calculated from the composition of each catalyst ink, the weight

of the coated catalyst ink and the size of the layer. As a result, the platinum contents of ion-exchange layer A and ion-exchange layer B were both 0.08 mg/cm$^2$.

The layer ion-exchange capacities of ion-exchange layer A and ion-exchange layer B composing the anode catalyst layer were 0.22 meq/g and 0.38 meq/g, respectively, and therefore the ratio of the layer ion-exchange capacities of both layers, i.e. of the layer with the highest layer ion-exchange capacity (ion-exchange layer B, $I_{max}$) to the layer with the lowest layer ion-exchange capacity (ion-exchange layer A, $I_{min}$), or ($I_{max}/I_{min}$), was 1.73.

<Assembly of cell for evaluation of solid polymer fuel cell>

A commercially available JARI standard cell was used to assemble a solid polymer fuel cell, in the following manner. First, on the sides of both catalyst layers of the MEA fabricated as described above opposite the sides in contact with the hydrocarbon-based polymer electrolyte membrane, there were laminated a pair of carbon cloths as gas diffusion layers, a pair of carbon separators having cut gas passageway grooves, a pair of collectors and a pair of end plates sandwiching the MEA in that order from the inside, and these were clamped with a bolt to assemble a solid polymer fuel cell with an effective membrane area of 25 cm$^2$.

<Evaluation of solid polymer fuel cell>

The solid polymer fuel cell was kept at 80°C while supplying humidified hydrogen to the anode catalyst layer and humidified air to the cathode catalyst layer side. During this time, the back pressure at the gas outlet of the separator on the anode catalyst layer side and cathode catalyst layer side of the solid polymer fuel cell was adjusted to 0.1 MPaG. The humidification of each source gas (hydrogen and air) was carried out by passing the source gas through a bubbler containing water. The water temperature of the hydrogen bubbler was 45 °C, the water temperature of the air bubbler was 55°C, the hydrogen gas flow rate was 529 mL/min and the air gas flow rate was 1665 mL/min. The value of the current density was measured when the voltage of the solid polymer fuel cell reached 0.4 V under these conditions, giving a value of 1.71 A/cm$^2$. The resistance value of the solid polymer fuel cell was measured when the current density reached 1.5 A/cm$^2$, giving a value of 4.4 mΩ.

(Comparative Example 1)

<Preparation of ion exchanger B>

After placing 8.47 g of xylene in a flask equipped with a reflux condenser tube under an argon atmosphere, it was heated to 90°C in an oil bath. Next, a mixture of 4.47 g of styrene, 4.02 g of acrylonitrile and 0.014 g of benzoyl peroxide was added dropwise over a period of 2 hours into a flask containing xylene. Upon completion of the dropwise addition, the mixture was stirred at 90°C for 2 hours and the flask was slowly cooled to room temperature to obtain a reaction mixture. The reaction mixture was poured into 200 g of methanol to precipitate a polymer. The precipitated polymer was recovered by filtration, rinsed with methanol and dried at 80°C to obtain 7.92 g of a poly(acrylonitrile-styrene) copolymer. The weight-average molecular weight of the poly(acrylonitrile-styrene) copolymer was 170,000.

After placing 20 mL of 1,2-dichloroethane and 1.00 g of poly(acrylonitrile-styrene) copolymer into a flask equipped with a reflux condenser tube under an argon atmosphere, the temperature was raised to 60°C in an oil bath to dissolve the poly(acrylonitrile-styrene) copolymer. Next, 0.56 g of chlorosulfonic acid was added dropwise into the flask over a period of 5 minutes, and after stirring at 60°C for 1 hour, the flask was slowly cooled to room temperature and the obtained reaction mixture was poured into 200 g of ice water to precipitate a polymer. The precipitated polymer was recovered by filtration and immersed for 1 hour in 200 g of water, and then it was washed with a large amount of water and dried at 80°C to obtain 1.25 g of a sulfonated poly(acrylonitrile-styrene) copolymer (ion exchanger B).

Ion exchanger B was used to form a membrane in the same manner as ion exchanger A, and the layer ion-exchange capacity was determined. As a result, the layer ion-exchange capacity of the membrane formed from ion exchanger B was 1.55 meq/g.

<Preparation of catalyst ink 4>

Ion exchanger B was mixed into a mixed solvent of ethanol and water (ethanol:water =1:1 volume ratio) to a concentration of 1 wt%. With 10.00 g of the obtained mixture there were mixed 0.50 g of platinum-supporting carbon (platinum loading weight: 50 wt%), 2.10 g of water and 14.20 g of ethanol. The obtained mixture was subjected to ultrasonic treatment for 1 hour and then stirred for 5 hours with a stirrer to obtain catalyst ink 4.

A membrane was formed in the same manner as catalyst ink 1 and the layer ion-exchange capacity (IEC, units: meq/g) was calculated. As a result of the measurement, the layer ion-exchange capacity of the membrane (electrode

composition) obtained from catalyst ink 4 was found to be 0.26 meq/g.

<Fabrication of MEA>

An MEA was fabricated in the same manner as Example 1, except that catalyst ink 4 was used instead of catalyst ink 3. The layer ion-exchange capacities of ion-exchange layer A and ion-exchange layer B composing the anode catalyst layer were 0.22 meq/g and 0.26 meq/g, respectively, and therefore $I_{max}/I_{min}$ was 1.18.

<Assembly of solid polymer fuel cell, and evaluation of solid polymer fuel cell>

A solid polymer fuel cell was assembled using the MEA described above and the solid polymer fuel cell was evaluated, in the same manner as Example 1. The value of the current density was measured when the voltage of the solid polymer fuel cell reached 0.4 V, giving a value of 1.40 A/cm$^2$. The resistance value of the solid polymer fuel cell was measured when the current density reached 1.5 A/cm$^2$, giving a value of 6.1 mΩ.

(Comparative Example 2)

<Preparation of catalyst ink 5>

Catalyst ink 5 was prepared in the same manner as catalyst ink 2, except that a commercially available 5 wt% Nafion$^R$ solution (product of Aldrich Co., trade name: Nafion perfluorinated ion-exchange resin, 5 wt% soln in lower aliphatic alcohols/$H_2O$ mix, EW: 1000, ion-exchange capacity: 1.0 meq/g) was used instead of the 5 wt% Nafion$^R$ solution used for preparation of catalyst ink 2.

A membrane was formed in the same manner as catalyst ink 1 and the layer ion-exchange capacity (IEC, units: meq/g) was calculated. As a result of the measurement, the layer ion-exchange capacity of the membrane (electrode composition) obtained from catalyst ink 5 was found to be 0.24 meq/g.

<Fabrication of MEA>

An MEA was fabricated in the same manner as Example 1, except that catalyst ink 5 prepared in the manner described above was used instead of catalyst ink 2. The layer ion-exchange capacities of ion-exchange layer A and ion-exchange layer B composing the anode catalyst layer in this MEA were 0.24 meq/g and 0.38 meq/g, respectively, and therefore $I_{max}/I_{min}$ was 1.58.

<Assembly of solid polymer fuel cell, and evaluation of solid polymer fuel cell>

A solid polymer fuel cell was assembled using the MEA described above and the solid polymer fuel cell was evaluated, in the same manner as Example 1. The value of the current density was measured when the voltage of the solid polymer fuel cell reached 0.4 V, giving a value of 1.58 A/cm$^2$. The resistance value of the solid polymer fuel cell was measured when the current density reached 1.5 A/cm$^2$, giving a value of 5.1 mΩ.

(Comparative Example 3)

<Preparation of catalyst ink 6>

To 6.30 g of a commercially available 5 wt% Nafion$^R$ solution (product of Aldrich Co., trade name: Nafion perfluorinated ion-exchange resin, 5 wt% soln in lower aliphatic alcohols/$H_2O$ mix, EW: 1000, ion-exchange capacity: 1.0 meq/g) there was added 1.00 g of platinum-supporting carbon (platinum loading weight: 50 wt%), and then 6.46 g of water and 55.35 g of ethanol were added. The obtained mixture was subjected to ultrasonic treatment for 1 hour and then stirred for 5 hours with a stirrer to obtain catalyst ink 6.

A membrane was formed in the same manner as catalyst ink 1 and the layer ion-exchange capacity (IEC, units: meq/g) was calculated. As a result of the measurement, the layer ion-exchange capacity of the membrane (electrode composition) obtained from catalyst ink 6 was found to be 0.24 meq/g.

<Fabrication of MEA>

An MEA was fabricated in the same manner as Example 1, except that catalyst ink 4 was used instead of catalyst ink 1 to form the cathode catalyst layer on the main side of the hydrocarbon-based polymer electrolyte membrane,

and catalyst ink 6 was used instead of catalyst inks 2 and 3 to form the anode catalyst layer on the other main side of the hydrocarbon-based polymer electrolyte membrane. The amount of platinum in the cathode catalyst layer was 0.60 mg/cm$^2$, based on calculation from the composition of catalyst ink 4, the weight of the coated catalyst ink 4 and the size of the cathode catalyst layer. Also, the amount of platinum in the cathode catalyst layer was 0.16 mg/cm$^2$, based on calculation from the composition of catalyst ink 6, the weight of the coated catalyst ink 6 and the size of the anode catalyst layer.

In this MEA, the anode catalyst layer was a monolayer and its layer ion-exchange capacity was 0.24 meq/g. The layer ion-exchange capacity was the same throughout the entire anode catalyst layer, and therefore $I_{max}/I_{min}$ was 1.0.

<Assembly of solid polymer fuel cell, and evaluation of solid polymer fuel cell>

A solid polymer fuel cell was assembled using the MEA described above and the solid polymer fuel cell was evaluated, in the same manner as Example 1. The value of the current density was measured when the voltage of the solid polymer fuel cell reached 0.4 V, giving a value of 1.52 A/cm$^2$. The resistance value of the solid polymer fuel cell was measured when the current density reached 1.5 A/cm$^2$, giving a value of 6.0 mΩ.

[Table 1]

| | Anode catalyst layer | | | Ion exchanger (*3) | | | | |
|---|---|---|---|---|---|---|---|---|
| | Gas diffusion layer-side ion-exchange layer $I_{max}$ meq/g | Polymer electrolyte membrane-side ion-exchange layer $I_{min}$ meq/g | $I_{max}/I_{min}$ | Gas diffusion layer-side ion-exchange layer $I_b$ meq/g | Polymer electrolyte membrane-side ion-exchange layer $I_a$ meq/g | $(I_b)/(I_a)$ | Current densitty (A/cm$^2$) (*1) | Cell resistance (mΩ) (*2) |
| Example 1 | 0.38 | 0.22 | 1.73 | 2.30 | 0.91 | 2.53 | 1.71 | 4.4 |
| Comp. Ex. 1 | 0.26 | 0.22 | 1.38 | 1.56 | 0.91 | 1.71 | 1.40 | 6.1 |
| Comp. Ex. 2 | 0.38 | 0.24 | 1.58 | 2.30 | 1.00 | 2.30 | 1.58 | 5.1 |
| Comp. Ex. 3 | 0.24 | | 1.00 | 1.0 | | 1.00 | 1.52 | 6.0 |

*1 The current densities are the values at 0.4 V
*2 The cell resistances are the values at 1.5 A/cm$^2$
*3 Ion exchanger in anode catalyst layer

Example 1, wherein the solid polymer fuel cell comprised an anode catalyst layer composed of multiple ion-exchange layers, and which had a value of greater than 1.7 for the ratio ($I_{max}/I_{min}$) of the layer ion-exchange capacity ($I_{max}$) of ion-exchange layer B situated on the anode diffusion layer side with respect to the layer ion-exchange capacity ($I_{min}$) of ion-exchange layer A situated on the hydrocarbon-based polymer electrolyte membrane side, exhibited high current density and low cell resistance, and therefore excellent electric power generation performance. In Comparative Example 1 and Comparative Example 2 which had $I_{max}/I_{min}$ ratios of smaller than 1.7, the current densities were lower and the cell resistances were higher, and therefore the electric power generation performance was lower, compared to Example 1. The current densities of Comparative Example 1 and Comparative Example 2 were approximately the same as that of Comparative Example 3 wherein the anode catalyst layer was a monolayer.

Also Example 1, which had a value of 2.4 for the ratio [$(I_b)/(I_a)$] between the ion-exchange capacity ($I_b$) of the ion exchanger in ion-exchange layer B and the ion-exchange capacity ($I_a$) of the ion exchanger in ion-exchange layer A in the anode catalyst layer, exhibited low cell resistance and high current density. The current densities of Comparative Example 1 and Comparative Example 2, which comprised multiple anode catalyst layers with $(I_b)/(I_a)$ ratios of smaller than 2.4, were approximately the same as that of Comparative Example 3 wherein the anode catalyst layer was a monolayer.

Fig. 4 is a graph showing the relationship between anode catalyst layer $I_{max}/I_{min}$ and current density. As seen

in Fig. 4, Example 1 which had an anode catalyst layer $I_{max}/I_{min}$ of 1.73 exhibited higher current density and therefore more excellent electric power generation performance, compared to Comparative Examples 1-3. As also shown in Fig. 4, even higher electric power generation performance is obtained when $I_{max}/I_{min}$ is 2.0 or greater, so that a solid polymer fuel cell with more excellent electric power generation performance can be obtained. In addition, even better electric power generation performance is obtained when $I_{max}/I_{min}$ is 2.4 or greater, so that a solid polymer fuel cell with even more excellent electric power generation performance can be obtained.

**Industrial Applicability**

According to the invention, it is possible to provide a membrane-electrode assembly that exhibits satisfactorily excellent electric power generation performance and is easy to produce, as well as a membrane-electrode-gas diffusion layer assembly and a solid polymer fuel cell each comprising the same.

## Claims

**1.** A membrane-electrode assembly comprising:

an anode catalyst layer which is composed of a plurality of ion-exchange layers with different layer ion-exchange capacities;
a cathode catalyst layer which is opposed to the anode catalyst layer; and
a polymer electrolyte membrane formed between the anode catalyst layer and the cathode catalyst layer,

wherein ion-exchange layer A having the smallest layer ion-exchange capacity of the plurality of ion-exchange layers is situated more toward the polymer electrolyte membrane than ion-exchange layer B having the largest layer ion-exchange capacity, and
the ratio of the layer ion-exchange capacity of the ion-exchange layer B with respect to the layer ion-exchange capacity of the ion-exchange layer A is 1.7 or greater.

**2.** A membrane-electrode assembly according to claim 1, wherein at lease one of the ion-exchange layer A and the ion-exchange layer B is the outermost layers of the anode catalyst layer.

**3.** A membrane-electrode assembly according to claim 1, wherein the ion-exchange layers with smaller layer ion-exchange capacities are situated nearer the polymer electrolyte membrane.

**4.** A membrane-electrode assembly according to claim 1, wherein the number of ion-exchange layers is 2.

**5.** A membrane-electrode assembly comprising:

an anode catalyst layer;
a cathode catalyst layer which is opposed to the anode catalyst layer; and
a polymer electrolyte membrane formed between the anode catalyst layer and the cathode catalyst layer,

wherein the anode catalyst layer has a continuously decreasing layer ion-exchange capacity toward the polymer electrolyte membrane, and
the ratio of the layer ion-exchange capacity on the surface of the anode catalyst layer opposite the polymer electrolyte membrane side with respect to the layer ion-exchange capacity on the surface of the polymer electrolyte membrane side of the anode catalyst layer is 1.7 or greater.

**6.** A membrane-electrode assembly according to any one of claims 1 to 5, wherein at least one of the cathode catalyst layer and the anode catalyst layer contains a hydrocarbon-based ion exchanger.

**7.** A membrane-electrode assembly according to any one of claims 1 to 5, wherein the polymer electrolyte membrane is a polymer electrolyte membrane comprising a hydrocarbon-based ion exchanger.

**8.** A membrane-electrode-gas diffusion layer assembly comprising:

a membrane-electrode assembly according to any one of claims 1 tao 5;

an anode side gas diffusion layer formed on the side of the anode catalyst layer opposite the polymer electrolyte membrane side; and
a cathode side gas diffusion layer formed on the side of the cathode catalyst layer opposite the polymer electrolyte membrane side.

**9.** A solid polymer fuel cell comprising:

a membrane-electrode-gas diffusion layer assembly according to claim 8;
an anode side separator formed on the side of the anode side gas diffusion layer opposite the anode catalyst layer side; and
a cathode side separator formed on the side of the cathode side gas diffusion layer opposite the cathode catalyst layer side.

**10.** A membrane-electrode assembly manufacturing method comprising:

a catalyst layer-forming step in which an anode catalyst layer is formed on a polymer electrolyte membrane by laminating ion-exchange layers, formed from catalyst inks comprising ion exchangers and catalyst substances, in order on a polymer electrolyte membrane in such a manner that the layer ion-exchange capacities of the ion-exchange layers decrease toward the polymer electrolyte membrane.

**11.** The membrane-electrode assembly manufacturing method according to claim 10, wherein the anode catalyst layer is formed by direct coating of the catalyst inks onto the polymer electrolyte membrane by spraying in the catalyst layer-forming step.

Fig.1

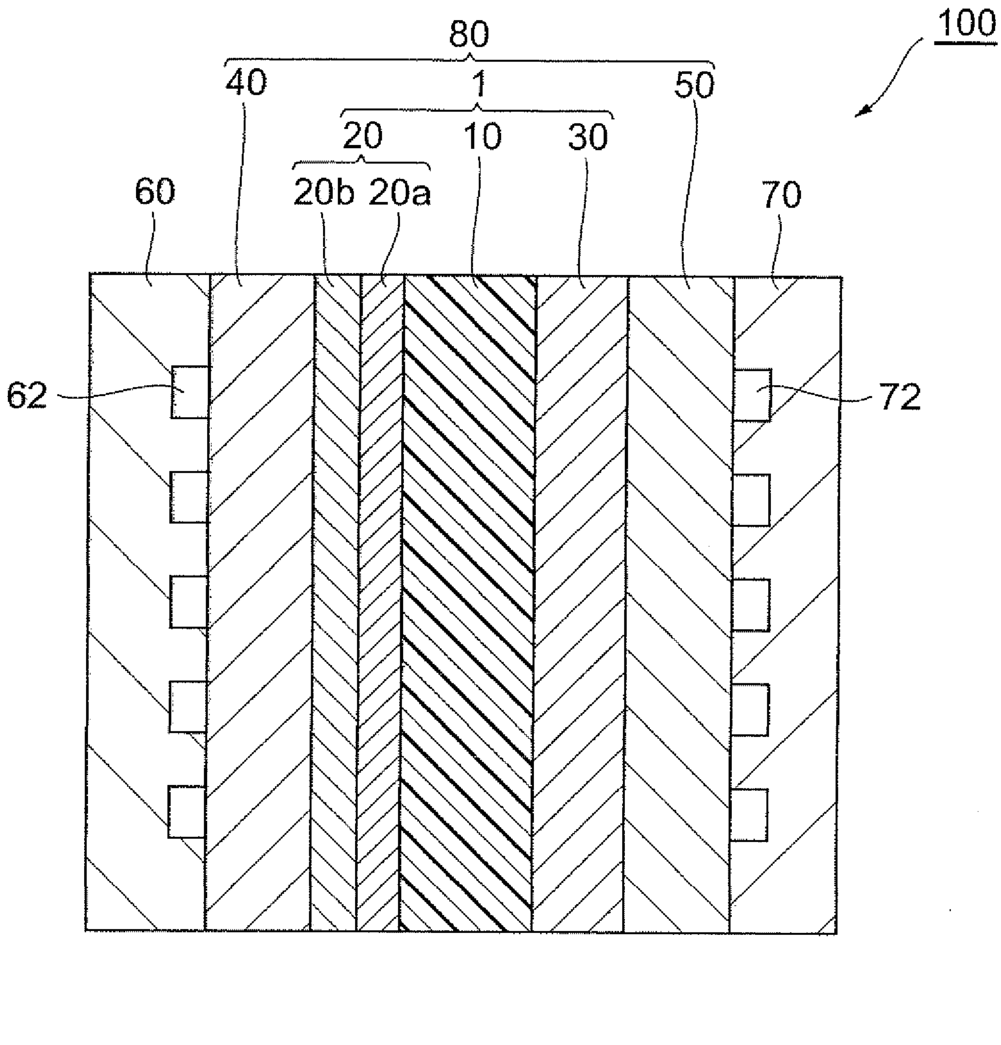

Fig.2

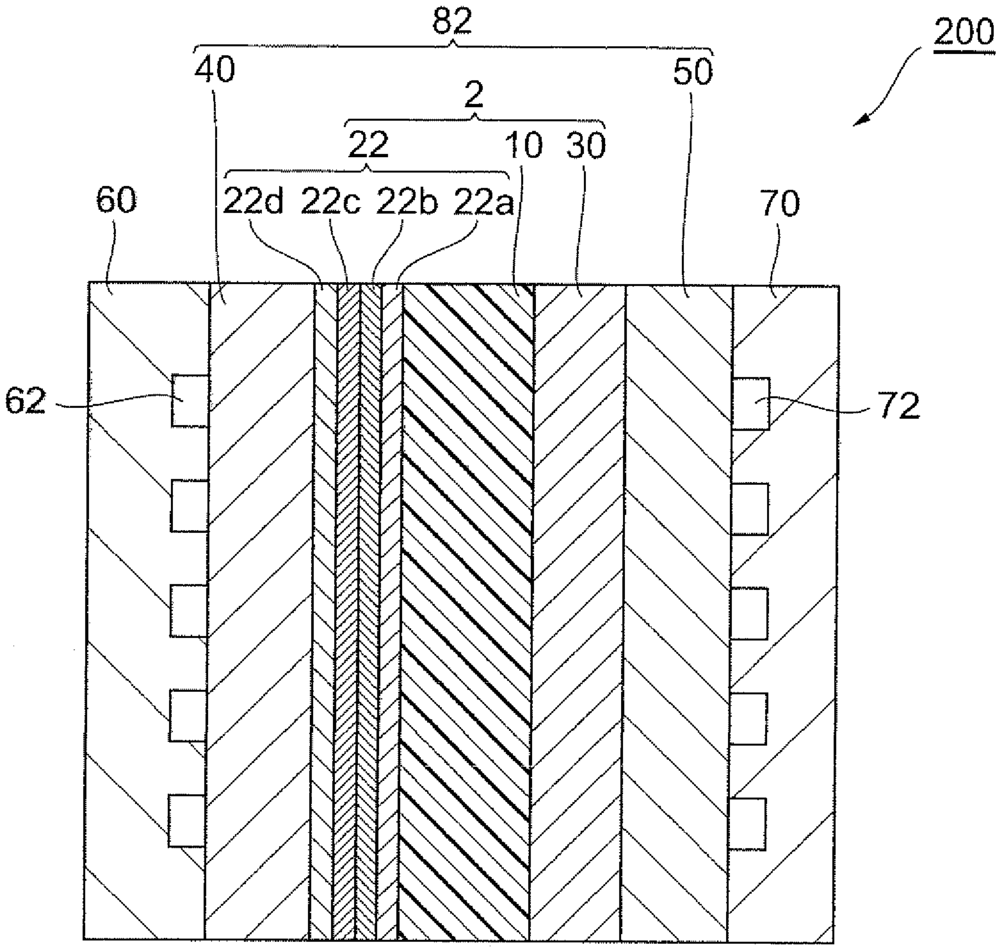

*Fig.3*

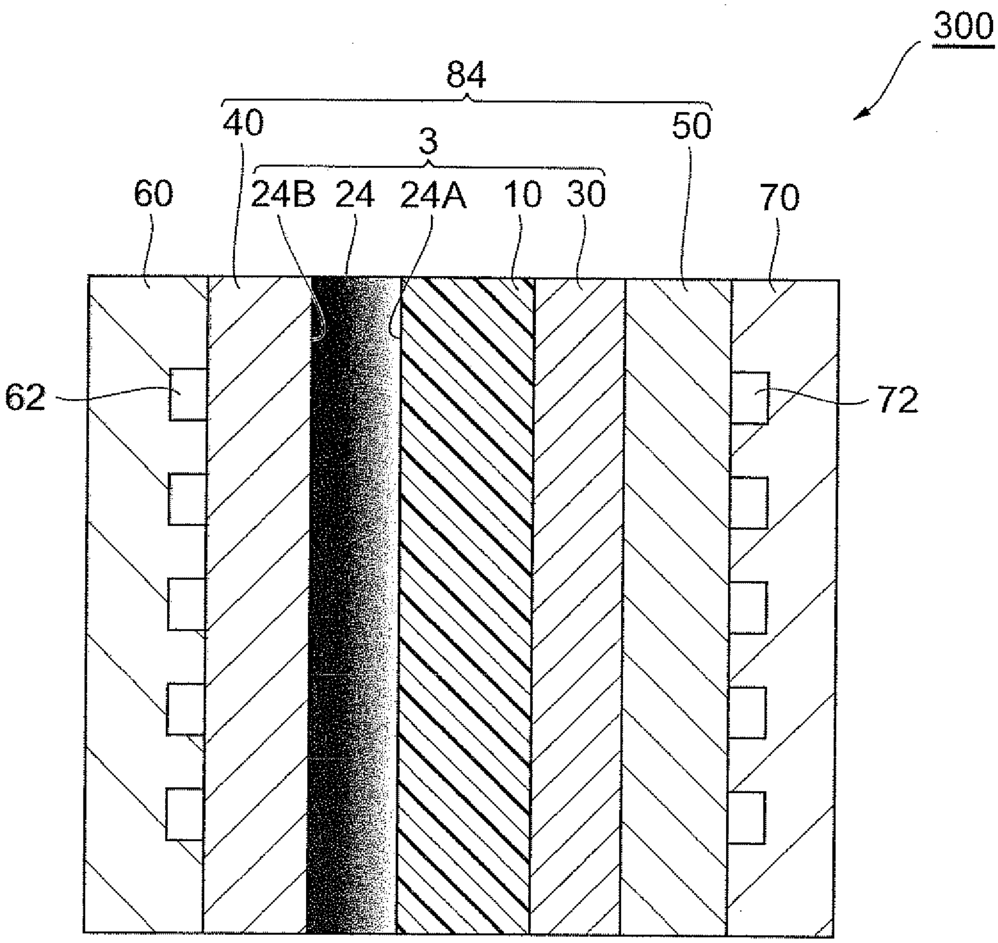

*Fig.4*

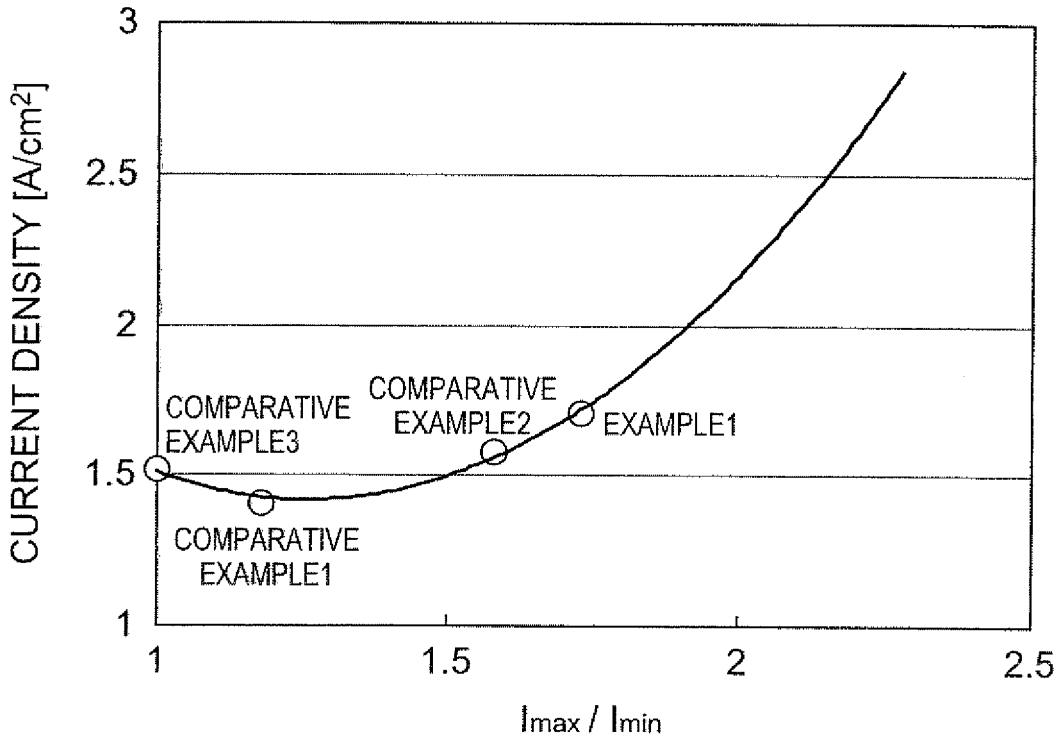
3
2.5
2
1.5
1
CURRENT DENSITY [A/cm2]
COMPARATIVE
EXAMPLE3
COMPARATIVE
EXAMPLE2
EXAMPLE1
COMPARATIVE
EXAMPLE1
1
1.5
2
2.5
Imax / Imin

**INTERNATIONAL SEARCH REPORT**

International application No.
PCT/JP2008/060894

A. CLASSIFICATION OF SUBJECT MATTER
*H01M8/02*(2006.01)i, *H01M4/86*(2006.01)i, *H01M4/88*(2006.01)i, *H01M8/10* (2006.01)i

According to International Patent Classification (IPC) or to both national classification and IPC

B. FIELDS SEARCHED

Minimum documentation searched (classification system followed by classification symbols)
H01M8/02, H01M4/86, H01M4/88, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 9-180730 A (Tokyo Gas Co., Ltd.), 11 July, 1997 (11.07.97), Full text (Family: none) | 1-11 |
| A | JP 2001-319663 A (Fuji Electric Co., Ltd.), 16 November, 2001 (16.11.01), Full text (Family: none) | 1-11 |
| A | JP 2002-164057 A (Fuji Electric Co., Ltd.), 07 June, 2002 (07.06.02), Full text (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 September, 2008 (02.09.08) | 16 September, 2008 (16.09.08) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/060894

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-259525 A (Honda Motor Co., Ltd.), 22 September, 2005 (22.09.05), Full text & US 2005/0202308 A1 & EP 1575105 A2 | 1-11 |
| A | JP 2005-174764 A (Equos Research Co., Ltd.), 30 June, 2005 (30.06.05), Full text (Family: none) | 1-11 |
| E,A | JP 2008-176990 A (Nissan Motor Co., Ltd.), 31 July, 2008 (31.07.08), Full text (Family: none) | 1-11 |
| E,A | JP 2008-192330 A (Asahi Glass Co., Ltd.), 21 August, 2008 (21.08.08), Full text (Family: none) | 1-11 |
| E,A | JP 2008-192328 A (Asahi Glass Co., Ltd.), 21 August, 2008 (21.08.08), Full text (Family: none) | 1-11 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP HEI9180730 B
- JP 2002151090 A
- JP 2001319663 A
- JP 2005259525 A
- JP HEI9102322 B
- US P4012303 A
- US P4605685 A
- JP HEI9110982 B
- JP HEI11116679 B
- JP 2001250567 A
- JP HEI11503262 B
- JP 2003031232 A
- JP 2004359925 A
- JP 2005232439 A
- JP 2003113136 A
- JP 2004089976 A
- JP 2003282096 A

### Non-patent literature cited in the description

- *J. Appl. Polym. Sci.,* 1974, vol. 18, 1969
- Fuel Cells and Polymers. Kyoritsu Publishing, 10 November 2005, 103-112